# EUROPEAN PATENT SPECIFICATION

(11) **EP 3 652 489 B1**
(45) Date of publication and mention of the grant of the patent: **07.06.2023**
(21) Application number: 18742984.0
(22) Date of filing: 12.07.2018
(51) Int. Cl.: F24T 10/17, F16L 33/22, F24T 10/00, F16L 39/00

(54) **CONNECTOR ARRANGEMENT FOR A FLEXIBLE SEALING TUBE AND A METHOD OF CONNECTING SUCH A FLEXIBLE SEALING TUBE**
VERBINDERANORDNUNG FÜR DICHTUNGSSCHLAUCH UND VERFAHREN ZUM VERBINDEN EINES SOLCHEN DICHTUNGSSCHLAUCHES
AGENCEMENT DE RACCORD POUR TUBE D'ÉTANCHÉITÉ FLEXIBLE ET PROCÉDÉ DE RACCORDEMENT DUDIT TUBE D'ÉTANCHÉITÉ FLEXIBLE

(30) Priority: 13.07.2017 SE 1750916
(43) Date of publication of application: 20.05.2020
(73) Proprietor: E-Tube Sweden AB, 412 68 Göteborg (SE)
(72) Inventor: SÄRNEÖ, Peter, 412 68 Göteborg (SE); WESTERLIND, Lars, 412 70 Göteborg (SE)
(74) Representative: Valea AB
(86) International application number: PCT/EP2018/069029
(87) International publication number: WO 2019/012079

(56) References cited:
- EP-A1- 1 547 715
- DE-A1- 2 928 414
- DE-A1- 3 244 496
- JP-A- H0 460 006
- KR-A- 20110 135 711
- US-A- 3 336 056
- US-A- 6 112 833
- US-A1- 2002 008 384
- US-A1- 2004 094 674
- US-A1- 2009 025 902

## Description

### TECHNICAL FIELD

The present disclosure pertains to a connector arrangement for fluid connection between fluid transport elements and at least one open ended fluid flow channel at a second end of a flexible sealing tube, which flexible sealing tube is adapted to be installed in and extend along a ground bore in a system for energy exchange with said adjacent ground. Moreover, the present disclosure also relates to a method of connecting for fluid exchange with fluid transport elements at least two open ended fluid flow channels at a second end of a multichannel flexible sealing tube having an essentially circular cross-section and being adapted to be installed in and extend along a ground bore in a system for energy exchange with said adjacent ground.

### BACKGROUND

Systems for extracting energy from the ground by utilizing a temperature differential between the ground and the surrounding environment are known. Current systems typically use a closed rigid tubing system installed in a ground bore, in which tubing system liquid is circulated by a pump to enable extraction of energy from the ground, such as for heating or cooling. The liquid is circulated within the tubing system and, for example, brought to a heat exchanger in a heat pump. The bore may be sealed at levels where the rock contains cracks in order not to contaminate different levels of ground water.

It should be noted that these types of installations are meant for long term use, all year around. An expected technical lifetime is at least 25 to 50 years during continuous use. Simplicity of installations as such, but also safety for use of the installation and for the surrounding environment is an important factor when designing the systems.

Energy wells conventionally have ground bore depths of between about 100 and 200 meters, although deeper may occur. The ground water level is often a few meters below ground level and systems for extracting energy from the ground typically employ heat pumps that take advantage of the substantially constant temperature of the ground at depths greater than approximately 2 meters below the ground surface, to source and sink thermal energy required to e.g. heat and cool an associated structure, respectively.

There are different ground layers at different levels in the ground and these layers are of different quality. The ground layers may be constituted of different types of rock, but there may also be layers of sand or gravel of different fractions which may reduce the wall strength of an associated borehole. The borehole may therefore suffer the risk of unwanted particles being brought into the borehole with flowing ground water, particularly in ground layers comprising smaller particles. The walls of the bore hole may even collapse due to such reduced wall strength.

The amount of energy which may be extracted from the ground depends on several factors, such as the extension of the bore, the temperature of the surrounding ground water and/or the earth crust, the amount of ground water transported around the borehole and the capacity of an installed system for extraction of temperature differences between the surrounding ground and a liquid circulated in an associated tubing system.

It has further been suggested to use, instead of a closed rigid tubing system installed in the ground bore, a flexible sealing tube adapted to be installed in and extend along the ground bore in such systems for energy exchange with the ground. By "flexible sealing tube" herein is meant a tube formed from a flexible material which material provides a water-impermeable barrier. When the flexible sealing tube is provided with joints, such joints should be water-impermeable as well to maintain the water-impermeable barrier of the flexible sealing tube. The flexible sealing tube may comprise a thermoplastic material, such as for example polyamide or polyester, allowing joints and sealing closures to be formed by welding, such as high frequency welding. It should be mentioned that such a flexible sealing tube when installed in a bore, may provide sufficient pressure against the bore walls in order for them not to collapse.

The flexible sealing tube may however also comprise or be made of a nonwoven material or a plastic film made from a thermoplastic material. The nonwoven material may be coated with a coating material to provide a liquid impermeable material, such coating may for example be a silicon or polyurethane coating, or a laminate of a plastic film and the nonwoven material.

One example of such a flexible sealing tube has an essentially circular cross-section corresponding to that of an associated ground bore and comprises a first closed tube end to be installed at an inner part of the ground bore. This flexible sealing tube further comprises a first channel and a second channel, each having an essentially semi-circular cross section and being formed by the flexible sealing tube and extending in a longitudinal direction of the flexible sealing tube. The first and second channels are in fluid connection with each other near the first closed tube end, thus enabling fluid to be circulated through the flexible sealing tube from a second end thereof.

The second tube end is closed and the first and second channels are operatively connectable to a heat exchanging device via a respective first and second inlet/outlet opening to the respective channel provided in the flexible sealing tube. Each of the inlet/outlet openings are provided with coupling means allowing connection with tubes for fluidly connecting respective channels of the flexible sealing tube with the heat exchanging device. Also, both of the inlet/outlet openings are further provided with a respective valve, for controlling the flow and pressure of a liquid in a system for energy exchange.

Connectivity as above thus requires that the second tube end is water impermeably closed, e.g. through welding, that inlet/outlet openings are provided to the respective channels and that each of the inlet/outlet openings are provided with coupling means, water impermeably sealed at the respective inlet/outlet openings, allowing leakage free connection with tubes for fluidly connecting the respective channels of the flexible sealing tube with a heat exchanging device.

It is therefore an object of the present invention to provide a simplified, convenient system for fluid connections of such channels of a flexible sealing tube with a heat exchanging device and a simplified and cost-efficient method for performing such connection. Document DE 29 28 414 A1 discloses a connector arrangement between fluid transport elements and at least two open ended fluid flow channels at a second end of a sealing tube.

### SUMMARY

The above and other objects may be provided by a connector arrangement according to claim 1. Further embodiments are set out in the dependent claims, in the following description and in the drawings.

The present disclosure pertains to a connector arrangement for fluid connection between fluid transport elements and at least two open ended fluid flow channels at a second end of a flexible sealing tube, wherein said flexible sealing tube is a multichannel flexible sealing tube, which flexible sealing tube is adapted to be installed in and extend along a ground bore in a system for energy exchange with said adjacent ground, wherein said connector arrangement comprises a respective insert element for each one of said open ended fluid flow channel s, each respective insert element being adapted to be inserted into its respective one of said open ends of said fluid flow channels, wherein each respective insert element has a cross section complementary to that of its respective one of said fluid flow channels, and has a fluid passage there through that is operatively connectable to a respective one of said fluid transport elements, wherein said connector arrangement further comprises a clamping structure having at least one clamping element with a through passage, which through passage has a cross section that corresponds to, or is smaller than, that of said cross-section of said flexible sealing tube, wherein said clamping structure further has clamping means for forcing together said through passage of said at least one clamping element with said through passage over said second end of said multichannel flexible sealing tube with a respective one of said insert elements inserted into each one of said open ended fluid flow channels of said multichannel flexible sealing tube, wherein each insert element further has a first end and a second end and an extension there along, such that each insert element and its respective through passage providing there between and along said extension a sealing length for the connector arrangement.

The design of the connector arrangement providing fluid connections between the channels of the flexile sealing tube and a system for energy exchange with the adjacent ground, such as a heat exchanger, simplifies the system as the connector arrangement requires few water impermeable seals, *e.g.* welds, at the flexile sealing tube compared to known systems. Also the structural integrity of the connector arrangement will be improved, as the combination of clamping and insert elements, when applied, will constitute a structurally stable and reliable joining structure.

The fact that the connector arrangement comprises a respective insert element for each one of said open ended fluid flow channels which, when inserted into its respective channel, can be closed by the clamping elements with said through passage placed over said second end of said multichannel flexible sealing tube being forced there over provides an effective fluid-tight connection between the channels of the flexible sealing tube and the fluid transport elements for enabling circulation of liquid through the flexile sealing tube, thus providing an efficient energy transfer between the liquid in the flexible sealing tube and the surrounding ground. Additionally, as the second end of the flexible sealing tube can be provided with open ended fluid flow channels, the second end of the flexible sealing tube is less cumbersome and costly to manufacture and the integrity thereof easier to guarantee.

Optionally, each respective fluid passage through each respective insert element has an essentially constant cross section along its extension through said respective insert element. As the fluid passages through the respective insert element has an essentially constant cross section, the fluid passages are easily provided to the insert elements requiring a minimum of machining, while still providing for efficient transport of liquid through the respective insert element.

Optionally, said essentially constant cross section of each respective fluid passage essentially corresponds to that of a fluid passage through each one of said fluid transport elements. As the constant cross section of each the fluid passage through the insert element corresponds to that of a fluid passage through one said fluid transport element an undisturbed flow of liquid from the insert element to the fluid transport element is ensured.

Optionally, each respective insert element has a first end and a second end and a second inlet/outlet opening at said second end for said fluid passage, which fluid passage at least partially along its extension through said respective insert element, has a cross section that is tapering from said second inlet/outlet opening at said second end towards said first end. The fluid passage through the insert element may thus, via the tapering cross section, provide for a smooth transition for a fluid lowing from an associated channel into the the insert element.

Optionally, said cross section of said fluid passage is tapering from a cross section essentially complementary to that of its corresponding fluid flow channel of said multichannel flexible sealing tube to a cross section essentially corresponding to that of a fluid passage through its corresponding fluid transport element. The fluid passage through the insert element may thus, via the cross section tapering from the channel cross section to that of a fluid passage through the fluid transport element provide for an undisturbed flow of liquid all the way from the channel to the fluid transport element.

Optionally, said cross section of said fluid passage is tapering from an essentially circular cross section corresponding to as large a circular opening as possible at said second end of said respective insert element, to a cross section essentially corresponding to that of a fluid passage through its corresponding fluid transport element. The fluid passage through the insert element may thus, via the cross section tapering from as large a circular opening as possible at the second end of the insert element to that of a fluid passage through the fluid transport element provide for an essentially undisturbed flow of liquid all the way from the channel to the fluid transport element whilst, due to the circular cross sections, requiring fairly uncomplicated machining ensuring reasonable manufacturing costs.

Optionally, said cross sections of said respective insert elements when combined are complementary to that of said fluid flow channels of a multichannel flexible sealing tube having an essentially circular cross-section. This is appropriate as most drilled ground bores will normally have an essentially circular cross-section.

Optionally, each respective insert element has an essentially semi-circular cross section complementary to that of an essentially semi-circular cross-section of a respective one of two corresponding fluid flow channels of said multichannel flexible sealing tube. Such a semi-circular cross-section of the fluid flow channels of the multichannel flexible sealing tube and insert elements caters to the minimum requirement of such a tube for the intended use, namely a first channel for a liquid to be transported to the deepest point of the ground bore and a second channel for returning the thus transported liquid back to ground level again.

Optionally, said fluid passages through each one of said respective insert elements are operatively connectable to a respective one of said fluid transport elements at a first inlet/outlet opening at a first end of each one of said respective insert elements. Such connectivity ensures that inset elements may be used with a variety of fluid transport elements and furthermore that mounting and replacement of insert elements as well as fluid transport elements may be performed independent of each other.

Optionally, said clamping structure has two clamping elements. Having two clamping elements provides a simple and cost efficient solution for providing fluid connection between the fluid transport elements and the open ended fluid flow channels at the second end of the multichannel flexible sealing tube.

Optionally, said two clamping elements are hinged together at one side of said through passage, such that said through passage of said two clamping elements can be closed around said insert elements when inserted into said fluid flow channels of said multichannel flexible sealing tube. Hinging together two clamping elements in this way provides an alternative simple and cost efficient solution for providing fluid connection between the fluid transport elements and the open ended fluid flow channels at the second end of the multichannel flexible sealing tube potentially requiring only means for forcing together the clamping elements at the side of said through passage opposite to the hinge.

Optionally, said two clamping elements are essentially semi-cylindrical such that a periphery of two such semi-cylindrical clamping elements closed around said insert elements when inserted into said fluid flow channels of said multichannel flexible sealing tube form a fully cylindrical shape. Having a fully cylindrical shape still provides for reasonable ease of manufacture and thus cost control, whilst at the same time facilitating the use *e.g.* wires or bands extending around the periphery as part of the means for forcing together the clamping elements.

Optionally, said clamping structure has one clamping element with said through passage where the cross section of said through passage is tapering from a cross section that essentially correspond to that of said cross-section of said multichannel flexible sealing tube to a cross-section that is slightly smaller than that of said cross-section of said multichannel flexible sealing tube. Having one clamping element with a tapering cross-section, as above, enables a press fit clamping of the flexible sealing hose by insertion of the insert elements into the respective channels thereof whilst placed in said through passage.

Optionally, said flexible sealing tube has a first end opposite to said second end, said first end being closed.

Optionally, said insert element has two fluid passages for connection to said flexible sealing tube, said insert element has a first end and a second end, and a second inlet/outlet opening at said second end for each one of said fluid passages, wherein each one of said fluid passages are fluidically connected to a respective fluid flow channel, within said flexible sealing tube, said fluid flow channels being fluidically separated from each other along a major part of an longitudinal extension of said flexible sealing tube, wherein said fluid flow channels are fluidically connected to one another closer to a first end of said flexible sealing tube than to said second end thereof.

The objects of the present disclosure may also be achieved by a method of connecting for fluid exchange with fluid transport elements at least two open ended fluid flow channels at a second end of a multichannel flexible sealing tube being adapted to be installed in and extend along a ground bore in a system for energy exchange with said adjacent ground according to the appended claims.

As such, the present disclosure also relates to a method comprising the steps of
a) Inserting a respective insert element having a cross section complementary to that of a said fluid flow channel and a fluid passage there through being operatively connectable to a respective fluid transport element into each one of said open ended fluid flow channels;
b) clamping over said second end of said multichannel flexible sealing tube a clamping structure having at least one clamping element with a through passage, which through passage has a cross section that corresponds to or is smaller than that of said cross-section of said multichannel flexible sealing tube, and
c) forcing together said through passage of said at least one clamping element with said through passage over said second end of said multichannel flexible sealing tube with a respective one of said insert elements inserted into each one of said open ended fluid flow channels of said multichannel flexible sealing tube by clamping means comprised in said clamping structure, wherein each insert element further has a first end and a second end and an extension there along, such that each insert element and its respective through passage providing there between and along said extension a sealing length for the connector arrangement.

### BRIEF DESCRIPTION OF THE DRAWINGS

- Fig. 1: illustrates a cross-sectional view of a flexible sealing tube with a connector arrangement according to the present disclosure installed in an energy well;
- Fig. 2a: illustrates an exploded view of a connector arrangement according to the present disclosure and an associated multichannel flexible sealing tube.
- Fig. 2b: illustrates the connector arrangement of figure 2a with insert elements in respective channels at a second end of the associated multichannel flexible sealing tube.
- Fig. 2c: illustrates the connector arrangement of figure 2a and how the clamping elements should be closed over the second end of the associated multichannel flexible sealing tube.
- Fig. 2d: illustrates how the clamping elements of figure 2a have been closed over the second end of the associated multichannel flexible sealing tube and how threaded rods and nuts may be applied as clamping means.
- Fig. 2e: illustrates the connector arrangement of figure 2d fully assembled with clamping means applied.
- Fig. 3a: illustrates a section through a connector arrangement according to the present disclosure where the fluid passages through the insert elements have constant cross sections;
- Fig. 3b: illustrates a section through an alternative connector arrangement according to the present disclosure where the fluid passages through the insert elements have tapering cross sections;
- Fig. 3c: illustrates a section through an alternative insert element according to the present disclosure where the first inlet/outlet opening is releaseably connectable to one fluid transport element via a connector element;
- Fig. 4a: illustrates a view from above of connector arrangement according to the present disclosure having two clamping elements that are hinged together at one side of a through passage in an open position;
- Fig. 4b: illustrates the connector arrangement of figure 4a in a closed position.
- Fig. 5: illustrates a connector arrangement according to the present disclosure having two semi-cylindrical clamping elements.
- Fig. 6: illustrates a connector arrangement according to the present disclosure having one clamping element.
- Fig. 7: illustrates an alternative embodiment of a connector arrangement according to the present disclosure.

### DETAILED DESCRIPTION

The present disclosure pertains to a connector arrangement 15 for fluid connection of fluid transport elements 22, 23 and at least two open ended fluid flow channels 6, 7 at a second end 5 of a multichannel flexible sealing tube 2, e.g. having an essentially circular cross-section, and being adapted to be installed in and extend along a ground 3 bore in a system 1 for energy exchange with the adjacent ground 3. Although drilled ground 3 bores will normally have an essentially circular cross-section it is envisaged herein that such ground 3 bores could potentially be given other cross sections and thus a multichannel flexible sealing tube 2 being adapted to be installed in and extend along a ground 2 bore cold be given such other cross-sections. It is to be understood that the drawings are schematic and that individual components, such as insert and clamping elements 16, 19 of the connector arrangement 15, are not necessarily drawn to scale. The flexible sealing tube 2 shown in the figures is provided as an example only and should not be considered limiting to the invention. Accordingly, the scope of invention is determined solely by the scope of the appended claims.

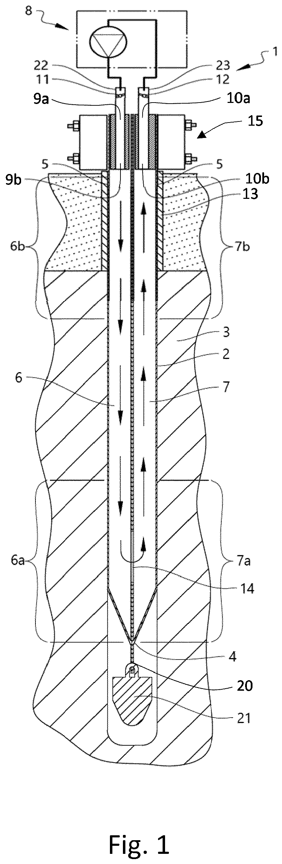

Fig. 1 illustrates a system 1 for energy exchange with the ground 3. The system 1 comprises a flexible sealing tube 2 installed in and extending along a ground 3 bore. The bore is a generally vertical ground 3 bore. The bore is used as energy well for extracting, for example, heat for heating a house (not shown) or for storing heat in the ground 3. Such bores are most often vertical, but may however also be inclined or extend horizontally. At the upper part of the bore the ground 3 often consists of soil instead of rock. Rock may also penetrate the soil up to the ground 3 surface, but it may also be present hundreds of meters below the ground 3 surface. Under normal conditions rock may be found somewhere between a few up to ten to twenty meters underneath the ground 3 level. The flexible sealing tube 2 according to the present disclosure may be used under all of these conditions.

The flexible sealing tube 2, when installed in the bore in the ground 3 and filled with a liquid, will seal against the perimeter of the bore such that the flexible sealing tube 2 seals of different ground 3 levels along the bore and the risk for contamination between different ground 3 levels along the bore is reduced.

The flexible sealing tube 2 comprises a closed first tube end 4 installed at the inner part of the bore and a second tube end 5 close to the mouth of the bore at the ground 3 level. Between the ground 3 level and the upper surface of the bore a casing 13, normally a concrete casing may be installed to shield the bore from the earth layers. The vertical upper end of the casing may be shielded with a casing cover or seal.

The flexible sealing tube 2 furthermore forms a first channel 6 and a second channel 7 extending in a longitudinal direction of the flexible sealing tube 2. The first and second channels 6, 7 are in fluid connection with each other via an opening 14 formed between the first and second channels 6, 7. The first and second channels 6, 7 each comprise a respective first end portion 6a, 7a located adjacent to the first tube end 4. The first and second channels 6, 7 are in fluid connection with each other in their respective first end portions 6a, 7a via the opening 14.

The first and second channels 6, 7 each comprise a respective second end portion 6b, 7b located adjacent to the second tube end 5. The first and second channels 6, 7 are, at the second end 5 of the flexible sealing tube 2, connected by the connector arrangement 15 to respective pipes 22, 23 leading into a heat exchanging device 8. The pipes 22, 23 will normally have a diameter of approximately 40-50 millimetres even if other dimensions may be possible. The diameter of the flexible sealing 2 tube is usually within 100 to 250 millimetres. It may be desirable to reach turbulent flow of the fluid through certain parts of the channels 6, 7. Turbulent flow may be achieved i.a. through a deliberate choice of size between different parts of the system.

In the respective pipes 22, 23 are optionally provided a respective valve 11, 12 for controlling the flow and pressure of the liquid in the system 1 for energy exchange. The first and second channels 6, 7 are connected to the heat exchanging device 8, such as a heat pump, via the pipes 22, 23, which may be steel or plastic pipes 22, 23.

In order to extract energy from the energy well, the heat pump 8 circulates the liquid in the system 1 and the pipe 22 supplies liquid into the first channel 6. The over pressure produced by the heat pump 8 transports the liquid from the first channel 6 and into the second channel 7, via the opening 14 between the first channel 6 and the second channel 7 positioned close to the first tube end 4 of the flexible sealing tube 2.

To maximize energy exchange from the bore, the opening 14 should be positioned as close to the first tube end 4 as possible. The second channel 7 returns the liquid to the heat pump system 8 where the heat energy absorbed by the liquid is extracted and may e.g. be transferred to a heating system of a house or building (not shown).

The liquid utilized in the system 1 conventionally comprises water and an anti-freezing agent, however it is also possible to use only water or other liquids. The pressure exerted by the liquid in the flexible sealing tube 2 will press the outer walls of the flexible sealing tube 2 against the walls of the bore which effectively closes off water surrounding the flexible sealing tube 2 within the bore from penetrating from one vertical level within the bore to another to another vertical level within the bore.

The system 1for extracting energy from the ground 3 may also be operated in the reverse direction, such as if the system is to be utilized for storing energy to the ground 3 or to cool the liquid in a cooling system for buildings or other applications.

The flexible sealing tube 2 is preferably made of a thermoplastic textile material, such as for example a woven material made of polyamide or polyester. The material should be substantially water impermeable and weldable. The woven material may be made from synthetic thermoplastic fiber yarns, such as for example from polyamide or polyester. The woven material may be coated with a coating material to provide a liquid impermeable material, the coating may be a silicon or polyurethane coating. The material may for example have a weight of from 500 g/m² to 1250 g/m². The thickness of the material may preferably be below 1 mm thick, preferably approximately 0.8 mm ± 10 %. A material of this kind is adaptable, or in other words flexible, to the surrounding ground and the walls of the bore into which the flexible sealing tube 2 is installed and may follow any irregularities in these walls. Simultaneously the material is strong enough to withstand any sharp edges in the walls and provide resistance to any fatigue or wear that may occur during the lifetime of the flexible sealing tube 2.

The flexible sealing tube 2 is at its first end 4 sealed, e.g. by a water-impermeable joint such as a continuous weld seam, so that no water from the ground penetrates the flexible sealing tube 2. The flexible sealing tube 2 is suitably provided with a hole 20 in the end portion for attachment of a load 21 to facilitate lowering of the flexible sealing tube 2 into the bore in the ground 3. The first and second channels 6 and 7 are, in the second end 5, connected by the connector arrangement 15 providing fluid connections between the channels 6, 7 and the piping 22,23.

The length of the flexible sealing tube 2 is adapted to extend substantially all the way up the mouth of the bore at the ground 3 level. One reason why it may be suitable for the flexible sealing tube 2 to extend slightly beneath the level of the mouth of the bore is that it prevents undesirable manipulation or damaging of the flexible sealing tube 2. In such cases, a suitable level of the second tube end 5 may be adjacent to the transition between a frost level and a frost-free level, which in Sweden corresponds to about 1-2 meters below ground 3 level. The part of the bore situated above the second tube end 5, but beneath the mouth of the bore is sealed and may for example be covered with earth. It should be noted that normally all arrangements and fittings for a heat exchange system 1 is concealed underground 3 to prohibit manipulation or weather impacts.

The flexible sealing tube 2 may typically have a length of 100 - 200 meters, to extend substantially all the way down to the bottom of the bore. The length of the flexible sealing tube 2 may be adjusted to fit the intended bore. The flexible sealing tube 2 may thus be both shorter and longer depending on the requirements of the specific energy well. The diameter of the flexible sealing tube may be from 100 to 250 millimetres, which should correspond to the diameter of the bore in which the flexible sealing tube 2 is to be installed.

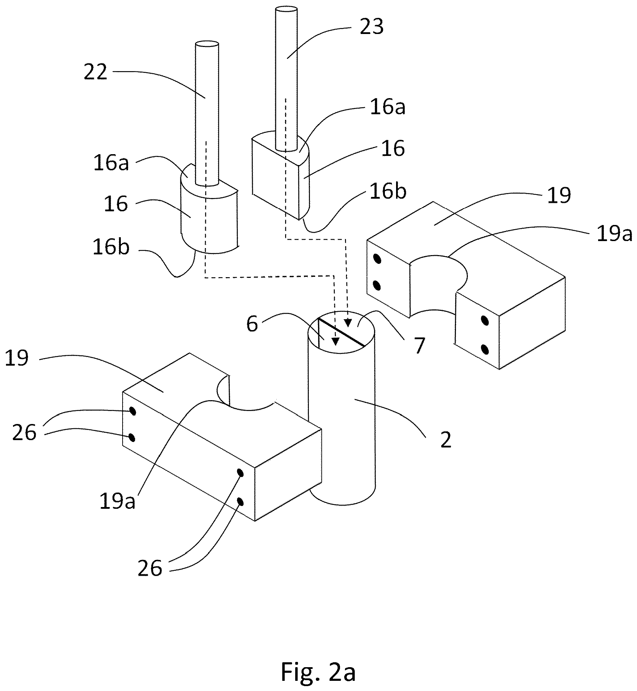

Fig. 2a is an exploded view of a connector arrangement 15 according to the present disclosure and an associated multichannel flexible sealing tube 2.

The connector arrangement 15 is provided for fluid connection of fluid transport elements constituted by the piping 22, 23 and at least two open ended fluid flow channels 6, 7 at the second end 5 of a multichannel flexible sealing tube 2, here shown having two channels, the first channel 6 and the second channel 7 although the skilled person will realize that it would be possible to utilize a connector arrangement 15 as described herein with a flexible sealing tube 2 having more than two channels 6, 7.

The flexible sealing tube 2 suitably, as shown, has an essentially circular cross-section, essentially corresponding to an associated ground 3 bore, and is, as described in more detail in the foregoing, adapted to be installed in and extend along such a ground 3 bore in a system 1 for energy exchange with the adjacent ground 3.

The connector arrangement 15 comprises a respective insert element 16 for each open ended fluid flow channel 6, 7. Each respective insert element 16 has a first end 16a and a second end 16b and a predetermined extension there between. Each respective insert element 16 is further adapted to be inserted second end 16b first into an open end of an associated fluid flow channel 6, 7 of the flexible sealing tube 2, as illustrated in figure 2a.

Furthermore, each respective insert element 16 has a cross section complementary to that of the associated fluid flow channel 6, 7, and still further a fluid passage 17 there through from a second inlet/outlet opening 9, 10 at the second end thereof and on to a respective fluid transport element, *e.g.* the piping 22, 23, which respective fluid transport element 22, 23 is operatively connected to a first inlet/outlet opening 9a, 9b at a first end 16a of its respective insert element 16.

In the illustrated embodiment each respective insert element 16 has an essentially semi-circular cross section complementary to that of an essentially semi-circular cross-section of a respective one of two corresponding fluid flow channels 6, 7 of the multichannel flexible sealing tube 2.

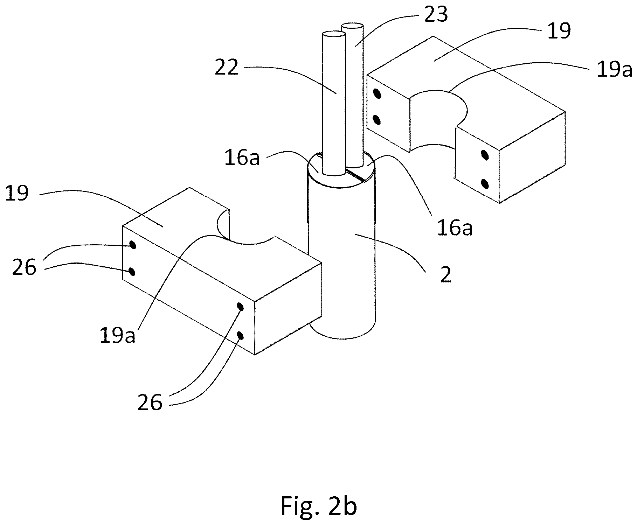

The connector arrangement 15 further comprises a clamping structure 18 having at least two clamping elements 19, as shown in figure 2b adjacent the flexible sealing tube 2 with the insert elements 16 in place. However, although it will usually be sufficient and cost efficient that the clamping structure 18 has two clamping elements 19, the clamping structure 18 could consist of any number of clamping elements 19, even one single clamping element 19.

The clamping elements 19, when two, as illustrated, suitably should have facing sides, e.g. essentially planar facing sides, sharing between them a through passage 19a. The extension of the through passage 19a should preferably correspond essentially to the predetermined extension of the insert elements 16, in order to utilize the full contact surfaces of these insert elements 16 for the connection. The predetermined extension of the insert elements 16 and the through passage 19a, *i.e.* the sealing length of the clamping joint, should be adapted to the dimensions of the flexible sealing hose 2 as well as the pressure of the circulated fluid. Usually this sealing length will be approximately 100-200 millimetres. The predetermined extension between the first end 16a and the second end 16b of an insert element 16 should thus at least correspond to this sealing length.

The outer dimension of the insert elements 16 should be complementary to that of the inner dimension of the associated fluid flow channels 6, 7 of the flexible sealing tube 2, and the outer dimension of the flexible sealing tube 2 should be complementary to the dimension of the through passage 19a of the clamping elements 19. If necessary for the clamping force and ultimately for the sealing action of the connector arrangement 15, care should be taken to design these dimensions with the thickness of the material of the flexible sealing tube 2 in mind. Depending on the compressibility of the material tighter or larger tolerances between the outer dimensions of the insert elements 16 in relation to the inner dimension of the through passage 19a may be needed.

As shown in figures 2a-2e the two clamping elements 19 can be essentially rectangular, although the clamping elements 19 could be given an arbitrary shape, as long as they share between them the through passage 19a.

The through passage 19a should have a cross section, when the clamping elements 19 are assembled together, that essentially corresponds to or is slightly smaller than that of the essentially circular cross-section of the multichannel flexible sealing tube 2, thus ensuring sufficient contact with walls of the multichannel flexible sealing tube 2 in use.

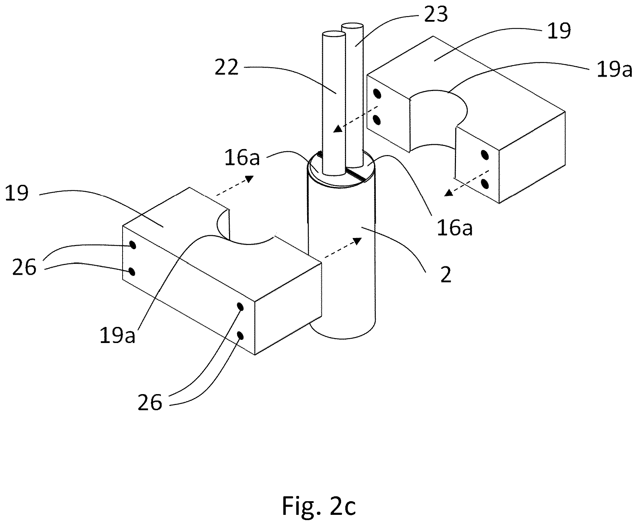

As illustrated in figure 2c, the two clamping elements 19 should be brought together in the direction of the dashed arrows, such that the through passage 19a is placed over the second end 5 of the multichannel flexible sealing tube 2.

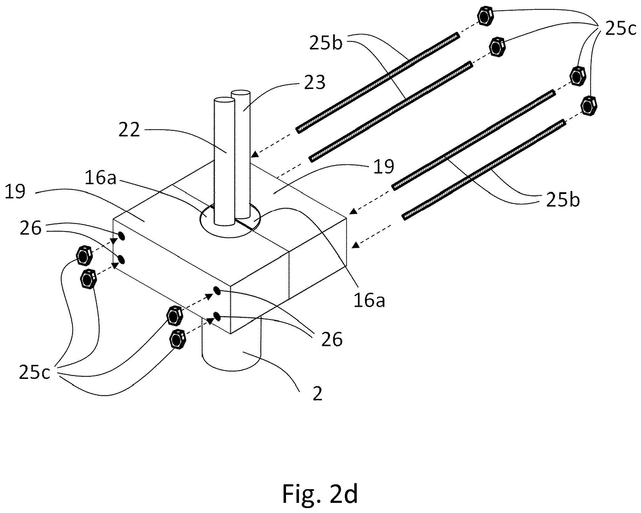

The clamping structure 18 further, as exemplified in figure 2d, has clamping means 25 for forcing together the clamping elements 19 with the through passage 19a over the second end 5 of the multichannel flexible sealing tube 2 with a respective insert element 16 inserted into each open ended fluid flow channel 6, 7 of the multichannel flexible sealing tube 2.

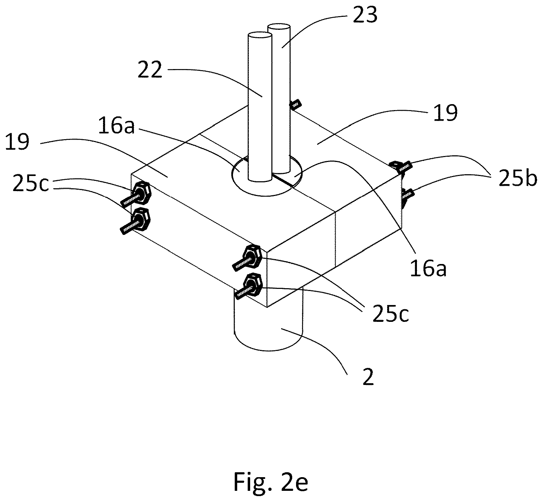

Figure 2e illustrates the connector arrangement 15 of figures 2a-2d fully assembled with the clamping means 25 applied. The clamping means 25 for forcing together the clamping elements 19 should comprise at least one, but preferably as shown in figure 2e four, bolted connections between the clamping elements 19. The clamping means 25 for forcing together the clamping elements 19 thus, as illustrated in figure 2e comprises four bolted connections between the two clamping elements 19. These bolted connections comprise four threaded rods 25b extending through respective through openings 26 in the clamping elements 19. The respective through openings 19 extend perpendicular from facing sides adjacent the through passage 19a to respective opposing sides of the clamping elements 19, and each treaded rod 25b has at each end at least one respective nut 25c for forcing the clamping elements 19 together upon being tightened towards their respective clamping element 19. Although shown as comprising four threaded rods 25b having at least one respective nut 25c at their ends the bolted connections could also comprise four bolts (not shown), each having a bolt head at a first end thereof at least one respective nut 25c that may be tightened from a second end thereof.

The length of the connector arrangement 15 in an axial direction thereof is approximately 200 mm as in the depicted figure. As already mentioned, it may however be both shorter as well as longer. It is contemplated that a preferred length lies between 50 and 300 mm, preferably between 100 and 250 mm and more preferably between 150 and 200 mm. A short length achieves a small installation height which may be preferable in small spaces, but imposes an increased clamping force between the clamping elements 19 and the insert elements 16. An increased length is advantageous from a stability point of view of the connector arrangement 15 and the clamping force may be reduced.

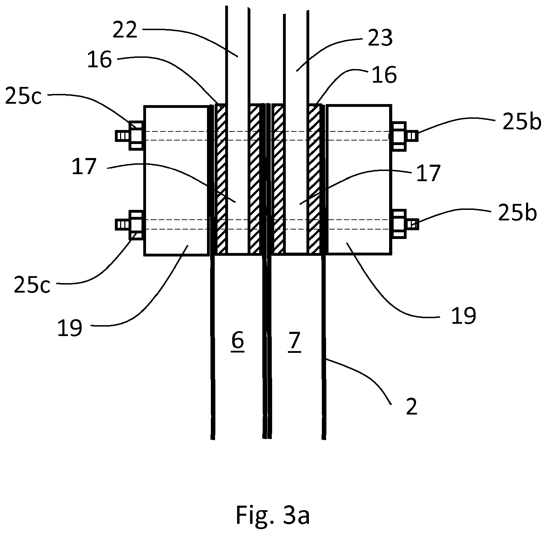

Fig. 3a illustrates a section through a connector arrangement 15 according to the present disclosure where each respective fluid passage 17 through each respective insert element 16 has an essentially constant cross section along its extension through the respective insert element 16. The essentially constant cross section of each respective fluid passage 17 through each respective insert element 16 corresponds essentially to that of a fluid passage through one fluid transport element, e.g. the piping 22, 23.

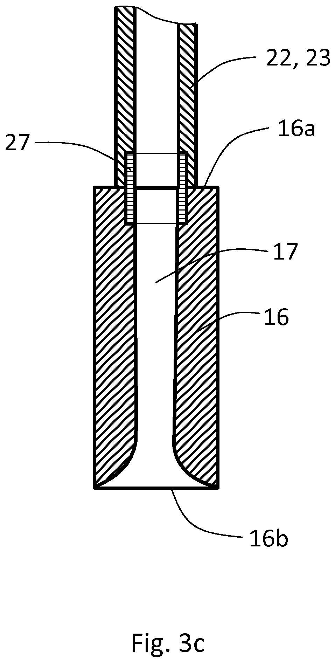

The fluid passage 17 through an insert element 16 may *e.g.* be formed by one of the pipes 22, 23 extending through the insert element 16 from the first end 16a of the insert element 16 to the second inlet/outlet opening 9, 10 at the second end 16b of the insert element 16 (first and second ends respectively, 16a and 16b, are best seen in Fig. 3c). For such embodiments the pipe 22, 23 may *e.g.* be molded into the insert element 16 upon molding thereof or alternatively affixed into a bore through the insert element 16 and the pipe 22, 23 may further be continuous from the first end 16a of the insert element 16 and on to the heat exchanging device 8.

Alternatively, the first inlet/outlet opening 10 at a first end 16a of each insert element 16 may be connectable to one fluid transport element, e.g. one pipe 22, 23, e.g. via a suitable connector element or a screw joint 27, *e.g.* a threaded stud 27 arranged at the first inlet/outlet opening, as illustrated in figure 3c. Such a connection may also be selectively releasable to facilitate replacement of components, such as the pipes 22, 23. The fluid passage 17 through an insert element 16 may, also for such embodiments, be formed by a pipe (not shown) extending through the insert element 16 from the first end 16a of the insert element 16 to the second inlet/outlet opening 9, 10 at the second end 16b of the insert element 16. For such embodiments, the pipes 22, 23 may display an increased diameter near the connector element or screw joint 27.

An essentially sharp, or in other words approximately perpendicular, transfer between the fluid passage 17 and the second end 16b of the insert element 16 leading into the fluid flow channel 6, 7 for which fluid in the flexible sealing tube 2 is flowing into the flexible sealing tube 2, is advantageous for the reason that turbulent fluid may be achieved which improves the energy exchange with the ground.

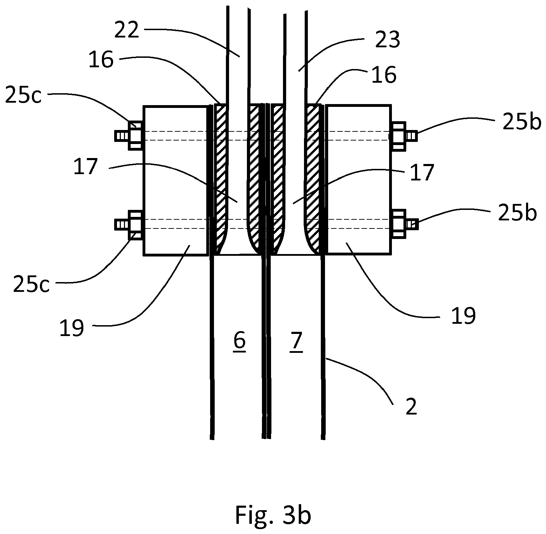

Fig. 3b illustrates a section through an alternative connector arrangement 15 according to the present disclosure where the fluid passages 17 through the insert elements 16 have tapering cross sections. In one embodiment each respective fluid passage 17 through each respective insert element 16, at least partially along its extension through the respective insert element 16, has a cross section that is tapering from the second inlet/outlet opening 9, 10 at the second end 16b towards the first end 16a. Such a tapering second end 16b is advantageous for reducing flow resistance, which ultimately may reduce the energy needed for pumping the fluid through the flexible sealing tube 2.

The cross section of the fluid passage 17 may either be tapering from a cross section essentially complementary to that of a corresponding fluid flow channel 6, 7 of the multichannel flexible sealing tube 2 to a cross section essentially corresponding to that of a fluid passage through one fluid transport element, *e.g.* one pipe 22, 23, or alternatively the cross section of the fluid passage 17 may be tapering from an essentially circular cross section corresponding to as large a circular opening as possible at the second end 16b of the respective insert element 16, to a cross section essentially corresponding to that of a fluid passage through one fluid transport element, e.g. one pipe 22, 23. It is preferable that the axial extension of the tapering at the second end 16b corresponds to approximately half the axial length of the connector arrangement 15, or of the insert element 16. For a connector arrangement 15 of 200 mm axial extension the tapering would consequently be of approximately 100 mm axial extension.

It is contemplated to combine an insert element 16 of the kind disclosed in Fig. 3a for the fluid passage 17 leading fluid into the flexible sealing tube 2, *i.e.* the first channel 6, with an insert element of the kind disclosed in Fig. 3b for the fluid passage 17 leading fluid out of the flexible sealing tube 2, i.e. the second channel 7. In such an embodiment the combined advantage of inducing turbulent flow in the fluid passage 17 leading fluid into the flexible sealing tube 2 and reducing flow resistance in the fluid passage 17 leading fluid out of the flexible sealing tube 2 is achieved.

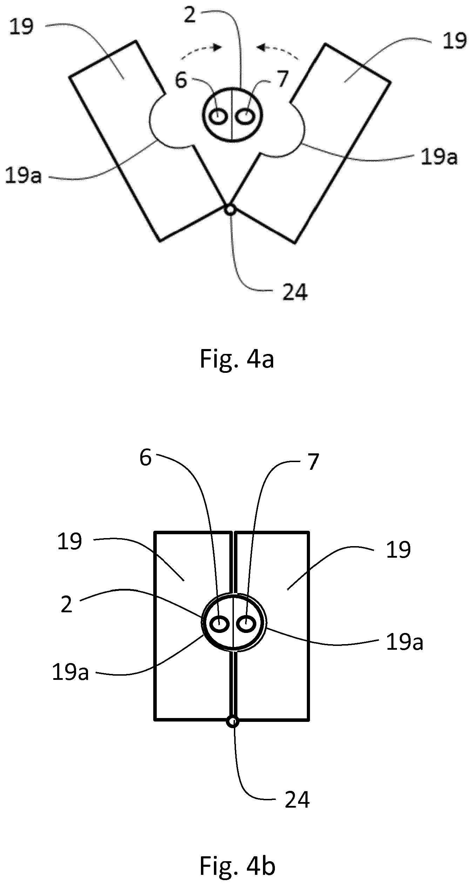

Fig. 4a illustrates a view from above of connector arrangement 15 according to the present disclosure having two clamping elements 19 that are hinged together at one side of a through passage 19a in an open position. The two clamping elements 19 are hinged together by a hinge 24 at one side of the through passage 19a, such that the through passage 19a of the two clamping elements 19 can be closed in the direction of the dashed arrows around the insert elements 16 when inserted into the fluid flow channels 6, 7 of the multichannel flexible sealing tube 2.

Fig. 4b illustrates the connector arrangement 15 of figure 4a having two hinged clamping elements 19 in a closed position, i.e. with the through passage 19a of the two clamping elements 19 closed around the insert elements 16 after they have been inserted into the fluid flow channels 6, 7 of the multichannel flexible sealing tube 2. Once closed, the two hinged clamping elements 19 may be forced together to seal the connection.

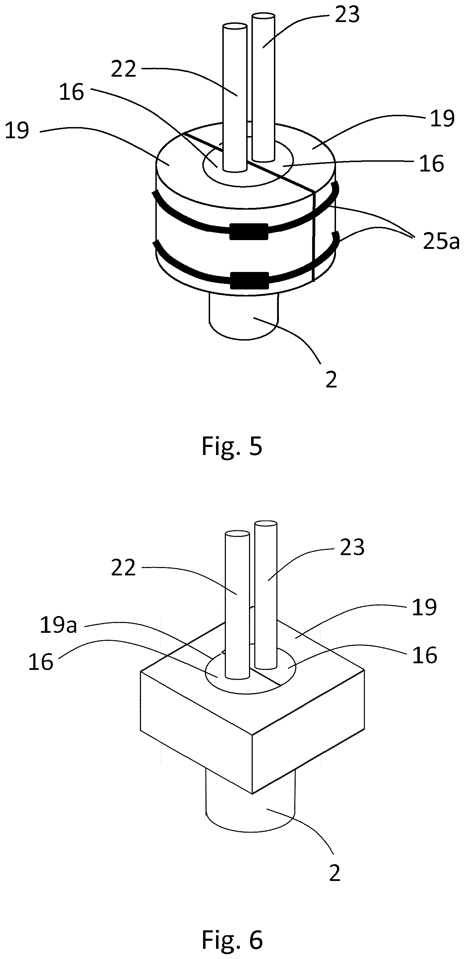

Fig. 5 illustrates a connector arrangement 15 according to the present disclosure having two semi-cylindrical clamping elements 19. The two clamping elements 19 are essentially semi-cylindrical such that a periphery of two such semi-cylindrical clamping elements 19 closed around the insert elements 16 when inserted into the fluid flow channels 6, 7 of the multichannel flexible sealing tube 2 will form a fully cylindrical shape. The clamping means 25 for forcing together facing sides of the clamping elements 19 of this fully cylindrical shape comprises at least one, or as shown in figure 5 preferably two, hose clamps 25a, preferably screw/band hose clamps, arranged around the cylindrical shape periphery of the two semi-cylindrical clamping elements 19. The hose clamps 25a should be arranged for, upon tightening, forcing together the facing sides of the clamping elements 19 with the through passage 19a over the second end 5 of the multichannel flexible sealing tube 2 with a respective insert element 16 inserted into each of the open ended fluid flow channels 6, 7 of the multichannel flexible sealing tube 2.

Fig. 6 illustrates a connector arrangement 15 according to the present disclosure having one clamping element 19 having a through passage 19a where the cross section of the through passage 19a is tapering from a cross section that essentially correspond to that of the cross-section of the multichannel flexible sealing tube 2 to a cross-section that is slightly smaller than that of the cross-section of the multichannel flexible sealing tube 2. Having one such clamping element 19 with a tapering cross-section, as above, enables a press fit clamping of the flexible sealing hose 2 by insertion of the insert elements 16 into the respective channels 6, 7 thereof whilst the multichannel flexible sealing tube 2 is placed in the through passage 19a.

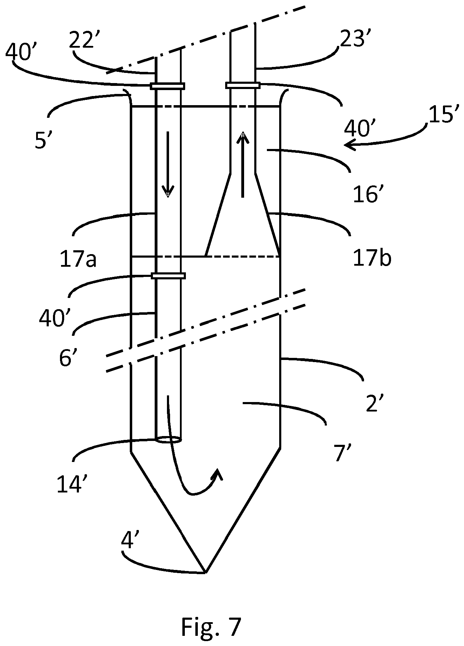

Fig. 7 illustrates an alternative embodiment of a connector arrangement 15' according to the present disclosure. This embodiment is generally equal to the embodiments disclosed above, the differences being the features which are specifically discussed below. For clarity's sake it should be noted that features which are not discussed explicitly may be taken from any one of the other illustrated embodiments without generally any alterations.

The flexible sealing tube 5' of Fig. 7 has an outer envelope which seals against the perimeter of the bore. The flexible sealing tube 2' has a first channel 6' and a second channel 7' extending in a longitudinal direction of the flexible sealing tube 2'. The first and second channels 6', 7' are in fluid connection with each other via an opening 14' formed between the first and second channels 6', 7' at the mouth 14' at the first end portion 6'a of the first channel 6'. The first channel 6' is a pipe, preferably made of a suitable plastic material, and the second channel 7' is made up of the flexible sealing tube 2'. Arrows indicate the fluid flow direction through the arrangement. The opening 14' is at least located closer to the first tube end 4' than to the second tube end 5'.

The connector arrangement 15', of which merely the insert element 16' is illustrated, is provided for fluid connection of the fluid transport elements constituted by the piping 22', 23' and the fluid flow channels 6', 7' at the second end 5' of a the flexible sealing tube 2'. The insert element 16' is a circular insert element which has two fluid passages 17a and 17b. Fluid passage 17a is connected to the first channel 6', and fluid passage 17b is connected to the second channel 7'. Merely as an example each fluid channel 17a and 17b is connected to the piping 22', 23' and the first channel 6', trough coupling devices 40'. The insert element 16' has a cross-section complimentary of that of the flexible sealing tube 2' when installed in the bore.

It should be noted that in the Fig. 7 embodiment more than two channels in the flexible sealing tube may be present, which would correspond to a similar number of fluid passages through the insert element. At least one of the channels may then be constituted by the flexible sealing tube itself, whereas the other channels may be constituted by pipes, such as the first channel 6' in the embodiment mentioned.

The insert elements as well as the clamping elements may suitably be made from polyethylene or alternatively from brass and be shaped through casting or milling, e.g. 3D-milling.

The clamping elements may optionally be equipped with feet (not shown), to get off the adjacent ground.

In a not illustrated alternative embodiment the casing extends vertically above ground to a higher level than earlier illustrated. The casing may be of other material than concrete, such as from polyethylene (or other plastic) or from brass (or other metal), or there may be a combination of a concrete casing and an inner casing of other material. A purpose of the casing is to ascertain that any soft ground does not collapse and close the bore and consequently the flexible sealing tube. The connector arrangement according to this embodiment may comprise two parts, a vertically lower first part and a vertically upper second part. The first part is preferably located in abutment with the second part. The purpose of the first part is to achieve a steady and rigid connection with the casing, whereas the purpose of the second part is to achieve a firm grip of the flexible sealing tube and to provide and hold or clamp the insert elements in place, just like in any one of the earlier disclosed embodiments. The insert elements of the connector arrangement in this embodiment may either penetrate through merely the second part, or all through also the first part, or even further. The second part comprises clamping element(s) like in any one of the earlier disclosed embodiments, and is/are connected for clamping purposes through similar clamping means around the flexible sealing tube and the insert elements. The first part also comprises connector element(s) like in the second part, which is/are connected through similar clamping means around the casing. In order to achieve a rigid connection between the first part and the second part, the second part is connected to the first part through fasteners, e.g. in the form of threaded metal rods, which fasteners fasten the second part to the first part. In this way the first part of the connector arrangement firmly clamps the whole connector arrangement, together with the flexible sealing tube, to the casing, which in turn is stably held in place by the ground itself.

## Claims

1. A connector arrangement (15, 15') for fluid connection between fluid transport elements (22, 23, 22', 23') and at least two open ended fluid flow channels (6, 7, 6', 7') at a second end (5, 5') of a flexible sealing tube (2, 2'), wherein said flexible sealing tube (2) is a multichannel flexible sealing tube, which flexible sealing tube (2, 2') is adapted to be installed in and extend along a ground (3) bore in a system (1) for energy exchange with said adjacent ground (3), wherein said connector arrangement (15, 15') comprises a respective insert element (16, 16') for each one of said open ended fluid flow channels. (6, 7, 6', 7'), each respective insert element (16, 16') being adapted to be inserted into its respective one of said open ends of said fluid flow channels (6, 7, 6', 7'), wherein each respective insert element (16, 16') has a cross section complementary to that of its respective one of said fluid flow channels (6, 7, 6', 7'), and has a fluid passage (17, 17a, 17b) there through that is operatively connectable to a respective one of said fluid transport elements (22, 23, 22', 23'), wherein said connector arrangement (15, 15') further comprises a clamping structure having at least one clamping element (19) with a through passage (19a), which through passage (19a) has a cross section that corresponds to, or is smaller than, that of said cross-section of said flexible sealing tube (2, 2'), wherein said clamping structure further has clamping means (25) for forcing together said through passage (19a) of said at least one clamping element (19) with said through passage (19a) over said second end (5) of said multichannel flexible sealing tube (2) with a respective one of said insert elements (16) inserted into each one of said open ended fluid flow channels (6, 7) of said multichannel flexible sealing tube (2), wherein each insert element (16, 16') further has a first end (16a) and a second end (16b) and an extension there along, such that each insert element (16, 16') and its respective through passage (19a) providing there between and along said extension a sealing length for the connector arrangement (15, 15').

2. The connector arrangement (15) according to claim 1, wherein each respective fluid passage (17) through each respective insert element (16) has a constant cross section along its extension through said respective insert element (16), said constant cross section of each respective fluid passage (17) corresponding to that of a fluid passage through each one of said fluid transport elements (22, 23).

3. The connector arrangement (15) according to claim 1, wherein each respective insert element (16) has a first end (16a) and a second end (16b) and a second inlet/outlet opening (9, 10) at said second end (16b) for said fluid passage (17), which fluid passage (17) at least partially along its extension through said respective insert element (16) has a cross section that is tapering from said second inlet/outlet opening (9, 10) at said second (16b) end towards said first end (16a).

4. The connector arrangement (15) according to claim 3, wherein said cross section of said fluid passage (17) is tapering from a cross section essentially complementary to that of its corresponding fluid flow channel (6, 7) of said multichannel flexible sealing tube (2) to a cross section corresponding to that of a fluid passage through its corresponding fluid transport element (22, 23).

5. The connector arrangement (15) according to claim 3, wherein said cross section of said fluid passage (17) is tapering from a circular cross section corresponding to as large a circular opening as possible at said second end (16b) of said respective insert element (16), to a cross section corresponding to that of a fluid passage through its corresponding fluid transport element (22, 23).

6. The connector arrangement (15) according to any one of claims 1 to 4, wherein said cross sections of said respective insert elements (16) when combined are complementary to that of said fluid flow channels (6, 7) of a multichannel flexible sealing tube (2) having an circular cross-section.

7. The connector arrangement (15) according to any one of claims 1 to 5, wherein each respective insert element (16) has a semi-circular cross section complementary to that of a semi-circular cross-section of a respective one of two corresponding fluid flow channels (6, 7) of said multichannel flexible sealing tube (2).

8. The connector arrangement (15) according to any one of claims 1 to 7, wherein said fluid passages (17) through each one of said respective insert elements (16) are operatively connectable to a respective one of said fluid transport elements (22, 23) at a first inlet/outlet opening (9a, 9b) at a first end (16a) of each one of said respective insert elements (16).

9. The connector arrangement (15) according to any one of claims 1 to 8, wherein said clamping structure has two clamping elements (19).

10. The connector arrangement (15) according to claim 9, wherein said two clamping elements (19) are hinged together at one side of said through passage (19a), such that said through passage (19a) of said two clamping elements (19) can be closed around said insert elements (16) when inserted into said fluid flow channels (6, 7) of said multichannel flexible sealing tube (2).

11. The connector arrangement (15) according to any one of claims 9 or 10, wherein said two clamping elements (19) are semi-cylindrical such that a periphery of two such semi-cylindrical clamping elements (19) closed around said insert elements (16) when inserted into said fluid flow channels (6, 7) of said multichannel flexible sealing tube (2) form a fully cylindrical shape.

12. The connector arrangement (15) according to any one of claims 1 to 8, wherein said clamping structure (18) has one clamping element (19) with said through passage (19a) where the cross section of said through passage (19a) is tapering from a cross section that correspond to that of said cross-section of said multichannel flexible sealing tube (2) to a cross-section that is smaller than that of said cross-section of said multichannel flexible sealing tube (2).

13. The connector arrangement (15) according to any one of claims 1 to 12, wherein said flexible sealing tube (2) has a first end (4) opposite to said second end (5), said first end (4) being closed.

14. The connector arrangement (15') according to claim 1, wherein at least one of said insert element (16') has two fluid passages (17a, 17b) for connection to a flexible sealing tube (2'), said insert element (16') has a first end and a second end, and a second inlet/outlet opening at said second end for each one of said fluid passages (17a, 17b), wherein each one of said fluid passages (17a, 17b) are fluidically connectable to a respective fluid flow channel, (6', 7') within said flexible sealing tube (2'), said fluid flow channels (6', 7') being fluidically separated from each other along a major part of a longitudinal extension of said flexible sealing tube (2'), wherein said fluid flow channels (6', 7') are fluidically connected to one another closer to a first end (4') of said flexible sealing tube (2') than to said second end (5') thereof.

15. A method of connecting for fluid exchange with fluid transport elements (22, 23) at least two open ended fluid flow channels (6, 7) at a second end of a multichannel flexible sealing tube (2) being adapted to be installed in and extend along a ground (3) bore in a system (1) for energy exchange with said adjacent ground (3), comprising the steps of:
a) inserting a respective insert element (16) having a cross section complementary to that of a said fluid flow channel (6, 7) and a fluid passage (17) there through being operatively connectable to a respective fluid transport element (22, 23) into each one of said open ended fluid flow channels (6, 7);
b) clamping, over said second end (5) of said multichannel flexible sealing tube (2) a clamping structure having at least one clamping element (19) with a through passage (19a), which through passage (19a) has a cross section that corresponds to or is smaller than that of said cross-section of said multichannel flexible sealing tube (2); and
c) forcing together said through passage (19a) of said at least one clamping element (19) with said through passage (19a) over said second end (5) of said multichannel flexible sealing tube (2) with a respective one of said insert elements (16) inserted into each one of said open ended fluid flow channels (6, 7) of said multichannel flexible sealing tube (2) by clamping means (25) comprised in said clamping structure, wherein each insert element (16, 16') further has a first end 16a and a second end 16b and an extension there along, such that each insert element (16, 16') and its respective through passage (19a) providing there between and along said extension a sealing length for the connector arrangement (15, 15').

## Patentansprüche

1. Verbinderanordnung (15, 15') für eine Fluidverbindung zwischen Fluidtransportelementen (22, 23, 22', 23') und mindestens zwei Fluidströmungskanälen (6, 7, 6', 7') mit offenem Ende an einem zweiten Ende (5, 5') eines flexiblen Dichtungsrohrs (2, 2'), wobei das flexible Dichtungsrohr (2) ein flexibles Mehrkanaldichtungsrohr ist, wobei das flexible Dichtungsrohr (2, 2') angepasst ist, um in einer Erd(3)-Bohrung in einem System (1) für einen Energieaustausch mit der angrenzenden Erde (3) installiert zu werden und sich entlang dieser zu erstecken, wobei die Verbinderanordnung (15, 15') ein jeweiliges Einsatzelement (16, 16') für jedes eine von den Fluidströmungskanälen (6, 7, 6', 7') mit offenem Ende umfasst, wobei jedes jeweilige Einsatzelement (16, 16') angepasst ist, in sein jeweiliges eines der offenen Enden der Fluidströmungskanäle (6, 7, 6', 7') eingesetzt zu werden, wobei jedes jeweilige Einsatzelement (16, 16') einen Querschnitt aufweist, der zu dem seines jeweiligen einen der Fluidströmungskanäle (6, 7, 6', 7') komplementär ist und einen Fluiddurchgang (17, 17a, 17b) durchhindurch aufweist, der mit einem jeweiligen einen der Fluidtransportelemente (22, 23, 22', 23') wirkverbindbar ist, wobei die Verbinderanordnung (15, 15') ferner eine Klemmstruktur umfasst, die mindestens ein Klemmelement (19) mit einem Durchgang (19a) aufweist, wobei der Durchgang (19a) einen Querschnitt aufweist, der dem des Querschnitts des flexiblen Dichtungsrohrs (2, 2') entspricht oder kleiner als dieser ist, wobei die Klemmstruktur ferner Klemmmittel (25) zum Zusammenpressen des Durchgangs (19a) des mindestens einen Klemmelements (19) mit dem Durchgang (19a) über das zweite Ende (5) des flexiblen Mehrkanaldichtungsrohrs (2) hinweg aufweist, wobei das jeweilige eine der Einsatzelemente (16) in jeden einen der Fluidströmungskanäle (6, 7) mit offenen Ende des flexiblen Mehrkanaldichtungsrohrs (2) eingesetzt wird, wobei jedes Einsatzelement (16, 16') ferner ein erstes Ende (16a) und ein zweites Ende (16b) und eine Erstreckung dort entlang derart aufweist, dass jedes Einsatzelement (16, 16') und sein jeweiliger Durchgang (19a) dazwischen und entlang der Erstreckung eine Dichtungslänge für die Verbinderanordnung (15, 15') bereitstellen.

2. Verbinderanordnung (15) nach Anspruch 1, wobei jeder jeweilige Fluiddurchgang (17) durch jedes jeweilige Einsatzelement (16) einen konstanten Querschnitt entlang seiner Erstreckung durch das jeweilige Einsatzelement (16) aufweist, wobei der konstante Querschnitt jedes jeweiligen Fluiddurchgangs (17), der dem eines Fluiddurchgangs durch jedes eines der Fluidtransportelemente (22, 23) entspricht.

3. Verbinderanordnung (15) nach Anspruch 1, wobei jedes jeweilige Einsatzelement (16) ein erstes Ende (16a) und ein zweites Ende (16b) und eine zweite Einlass-/Auslassöffnung (9, 10) an dem zweiten Ende (16b) für den Fluiddurchgang (17) aufweist, wobei der Fluiddurchgang (17) mindestens teilweise entlang seiner Erstreckung durch das jeweilige Einsatzelement (16) einen Querschnitt aufweist, der sich von der zweiten Einlass-/Auslassöffnung (9, 10) bei dem zweiten (16b) Ende in Richtung des ersten Endes (16a) verjüngt.

4. Verbinderanordnung (15) nach Anspruch 3, wobei sich der Querschnitt des Fluiddurchgangs (17) von einem Querschnitt, der im Wesentlichen komplementär zu dem seines entsprechenden Fluidströmungskanals (6, 7) des flexiblen Mehrkanaldichtungsrohrs (2) ist, zu einem Querschnitt verjüngt, der dem eines Fluiddurchgangs durch sein entsprechendes Fluidtransportelement (22, 23) entspricht.

5. Verbinderanordnung (15) nach Anspruch 3, wobei sich der Querschnitt des Fluidkanals (17) von einem kreisförmigen Querschnitt, der einer größtmöglichsten kreisförmigen Öffnung an dem zweiten Ende (16b) des jeweiligen Einsatzelements (16) entspricht, zu einem Querschnitt verjüngt, der dem eines Fluiddurchgangs durch sein entsprechendes Fluidtransportelement (22, 23) entspricht.

6. Verbinderanordnung (15) nach einem der Ansprüche 1 bis 4, wobei die Querschnitte der jeweiligen Einsatzelemente (16), wenn sie kombiniert werden, zu denen der Fluidströmungskanäle (6, 7) eines flexiblen Mehrkanaldichtungsrohrs (2) komplementär sind, das einen kreisförmigen Querschnitt aufweist.

7. Verbinderanordnung (15) nach einem der Ansprüche 1 bis 5, wobei jedes jeweilige Einsatzelement (16) einen halbkreisförmigen Querschnitt aufweist, der zu dem eines halbkreisförmigen Querschnitts eines jeweiligen einen von zwei entsprechenden Fluidströmungskanälen (6, 7) des flexiblen Mehrkanaldichtungsrohrs (2) komplementär ist.

8. Verbinderanordnung (15) nach einem der Ansprüche 1 bis 7, wobei die Fluiddurchgänge (17) durch jedes eine der jeweiligen Einsatzelemente (16) mit einem jeweiligen einen der Fluidtransportelemente (22, 23) an einer ersten Einlass-/Auslassöffnung (9a, 9b) an einem ersten Ende (16a) jedes der jeweiligen Einsatzelemente (16) wirkverbindbar sind.

9. Verbinderanordnung (15) nach einem der Ansprüche 1 bis 8, wobei die Klemmstruktur zwei Klemmelemente (19) aufweist.

10. Verbinderanordnung (15) nach Anspruch 9, wobei die zwei Klemmelemente (19) an einer Seite des Durchgangs (19a) derart zusammen angelenkt sind, dass der Durchgang (19a) der zwei Klemmelemente (19) um die Einsatzelemente (16) herum geschlossen werden kann, wenn sie in die Fluidströmungskanäle (6, 7) des flexiblen Mehrkanaldichtungsrohrs (2) eingesetzt werden.

11. Verbinderanordnung (15) nach einem der Ansprüche 9 oder 10, wobei die zwei Klemmelemente (19) derart halbzylindrisch sind, dass ein Umfang von zwei derartigen halbzylindrischen Klemmelementen (19) um die Einsatzelemente (16) herum geschlossen ist, wenn sie in die Fluidströmungskanäle (6, 7) des flexiblen Mehrkanaldichtungsrohrs (2) eingesetzt sind, eine vollständig zylindrische Form ausbildet.

12. Verbinderanordnung (15) nach einem der Ansprüche 1 bis 8, wobei die Klemmstruktur (18) ein Klemmelement (19) mit dem Durchgang (19a) aufweist, wobei sich der Querschnitt des Durchgangs (19a) von einem Querschnitt, der dem des Querschnitts des flexiblen Mehrkanaldichtungsrohrs (2) entspricht, zu einem Querschnitt verjüngt, der kleiner als der des Querschnitts des flexiblen Mehrkanaldichtungsrohrs (2) ist.

13. Verbinderanordnung (15) nach einem der Ansprüche 1 bis 12, wobei das flexible Dichtungsrohr (2) ein erstes Ende (4) aufweist, das dem zweiten Ende (5) gegenüberliegt, wobei das erste Ende (4) geschlossen ist.

14. Verbinderanordnung (15') nach Anspruch 1, wobei mindestens eines des Einsatzelements (16') zwei Fluiddurchgänge (17a, 17b) für die Verbindung mit einem flexiblen Dichtungsrohr (2') aufweist, wobei das Einsatzelement (16') ein erstes Ende und ein zweites Ende und eine zweite Einlass-/Auslassöffnung an dem zweiten Ende für jeden der Fluiddurchgänge (17a, 17b) aufweist, wobei jeder der Fluiddurchgänge (17a, 17b) zu einem jeweiligen Fluidströmungskanal (6', 7') innerhalb des flexiblen Dichtungsrohrs (2') fluidisch verbindbar ist, wobei die Fluidströmungskanäle (6', 7') entlang eines Hauptteils einer Längserstreckung des flexiblen Dichtungsrohrs (2') voneinander fluidisch getrennt sind, wobei die Fluidströmungskanäle (6', 7') näher an einem ersten Ende (4') des flexiblen Dichtungsrohrs (2') als an dem zweiten Ende (5') davon miteinander fluidisch verbunden sind.

15. Verfahren zum Verbinden für den Fluidaustausch mit Fluidtransportelementen (22, 23) von mindestens zwei Fluidströmungskanäle (6, 7) mit offenem Ende an einem zweiten Ende eines flexiblen Mehrkanaldichtungsrohrs (2), das angepasst ist, um in einer Erd(3)-Bohrung in einem System (1) für einen Energieaustausch mit der angrenzenden Erde (3) installiert zu werden und sich entlang dieser zu erstecken, umfassend die Schritte von:
a) Einsetzen eines jeweiligen Einsatzelements (16), das einem Querschnitt, der zu dem eines Fluidströmungskanals (6, 7) komplementär ist, und einen Fluiddurchgang (17) dahindurch aufweist, der mit einem jeweiligen Fluidtransportelement (22, 23) in jeden der Fluidströmungskanäle (6, 7) mit offenem Ende wirkverbindbar ist;
b) Festklemmen, über das zweite Ende (5) des flexiblen Mehrkanaldichtungsrohrs (2) einer Klemmstruktur, die mindestens ein Klemmelement (19) mit einem Durchgang (19a) aufweist, wobei der Durchgang (19a) einen Querschnitt aufweist, der dem des Querschnitts des flexiblen Mehrkanaldichtungsrohrs (2) entspricht oder kleiner als dieser ist; und
c) Zusammenpressen des Durchgangs (19a) des mindestens einen Klemmelements (19) mit dem Durchgang (19a) über das zweite Ende (5) des flexiblen Mehrkanaldichtungsrohrs (2) hinweg, wobei ein jeweiliges eines der Einsatzelemente (16) in jeden einen der Fluidströmungskanäle (6, 7) mit offenem Ende des flexiblen Mehrkanaldichtungsrohrs (2) durch Klemmmittel (25) eingesetzt wird, die in der Klemmstruktur enthalten sind, wobei jedes Einsatzelement (16, 16') ferner ein erstes Ende 16a und ein zweites Ende 16b und eine Erstreckung dort entlang derart aufweist, dass jedes Einsatzelement (16, 16') und sein jeweiliger Durchgang (19a) dazwischen und entlang der Erstreckung eine Dichtungslänge für die Verbinderanordnung (15, 15`) bereitstellen.

## Revendications

1. Agencement de raccord (15, 15') pour un raccordement fluidique entre des éléments de transport de fluide (22, 23, 22', 23') et au moins deux canaux d'écoulement de fluide à extrémités ouvertes (6, 7, 6', 7') au niveau d'une seconde extrémité (5, 5') d'un tube d'étanchéité flexible (2, 2'), ledit tube d'étanchéité flexible (2) étant un tube d'étanchéité flexible multicanal, lequel tube d'étanchéité flexible (2, 2') étant conçu pour être installé dans et s'étendre le long d'un alésage au sol (3) dans un système (1) d'échange d'énergie avec ledit sol adjacent (3), ledit agencement de raccord (15, 15') comprenant un élément d'insertion respectif (16, 16') pour chacun desdits canaux d'écoulement de fluide à extrémités ouvertes (6, 7, 6', 7'), chaque élément d'insertion respectif (16, 16') étant adapté pour être inséré dans son extrémité respective desdites extrémités ouvertes desdits canaux d'écoulement de fluide (6, 7, 6', 7'), chaque élément d'insertion respectif (16, 16') ayant une section transversale complémentaire à celle de son canal respectif desdits canaux d'écoulement de fluide (6, 7, 6', 7'), et ayant un passage de fluide (17, 17a, 17b) à travers celui-ci qui peut être raccordé de manière opérationnelle à un élément respectif desdits éléments de transport de fluide (22, 23, 22', 23'), ledit agencement de raccord (15, 15') comprenant en outre une structure de serrage ayant au moins un élément de serrage (19) doté d'un passage traversant (19a), lequel passage traversant (19a) ayant une section transversale qui correspond à, ou est plus petite que, celle de ladite section transversale dudit tube d'étanchéité flexible (2, 2'), ladite structure de serrage ayant en outre un moyen de serrage (25) pour forcer ensemble ledit passage traversant (19a) dudit au moins un élément de serrage (19) avec ledit passage traversant (19a) sur ladite seconde extrémité (5) dudit tube d'étanchéité flexible multicanal (2) avec un élément respectif desdits éléments d'insertion (16) inséré dans chacun desdits canaux d'écoulement de fluide à extrémités ouvertes (6, 7) dudit tube d'étanchéité flexible multicanal (2), chaque élément d'insertion (16, 16') ayant en outre une première extrémité (16a) et une seconde extrémité (16b) et une extension le long de celles-ci, de telle sorte que chaque élément d'insertion (16, 16') et son passage traversant respectif (19a) fournissent entre eux et le long de ladite extension une longueur d'étanchéité pour l'agencement de raccord (15, 15').

2. Agencement de raccord (15) selon la revendication 1, dans lequel chaque passage de fluide respectif (17) à travers chaque élément d'insertion respectif (16) a une section transversale constante le long de son extension à travers ledit élément d'insertion respectif (16), ladite section transversale constante de chaque passage de fluide respectif (17) correspondant à celle d'un passage de fluide à travers chacun desdits éléments de transport de fluide (22, 23).

3. Agencement de raccord (15) selon la revendication 1, dans lequel chaque élément d'insertion respectif (16) a une première extrémité (16a) et une seconde extrémité (16b) et une seconde ouverture d'entrée/sortie (9, 10) au niveau de ladite seconde extrémité (16b) pour ledit passage de fluide (17), lequel passage de fluide (17) au moins partiellement le long de son extension à travers ledit élément d'insertion respectif (16) a une section transversale qui est effilée à partir de ladite seconde ouverture d'entrée/sortie (9, 10) au niveau de ladite seconde (16b) extrémité, vers ladite première extrémité (16a).

4. Agencement de raccord (15) selon la revendication 3, dans lequel ladite section transversale dudit passage de fluide (17) est effilée à partir d'une section transversale sensiblement complémentaire à celle de son canal d'écoulement de fluide correspondant (6, 7) dudit tube d'étanchéité flexible multicanal (2) jusqu'à une coupe transversale correspondant à celle d'un passage de fluide à travers son élément de transport de fluide (22, 23) correspondant.

5. Agencement de raccord (15) selon la revendication 3, dans lequel ladite section transversale dudit passage de fluide (17) est effilée à partir d'une section transversale circulaire correspondant à une ouverture circulaire aussi grande que possible au niveau de ladite seconde extrémité (16b) dudit élément d'insertion respectif (16), jusqu'à une coupe transversale correspondant à celle d'un passage de fluide à travers son élément de transport de fluide correspondant (22, 23).

6. Agencement de raccord (15) selon l'une quelconque des revendications 1 à 4, dans lequel lesdites sections transversales desdits éléments d'insertion respectifs (16), lorsqu'elles sont combinées, sont complémentaires de celles desdits canaux d'écoulement de fluide (6, 7) d'un tube d'étanchéité flexible multicanal (2) ayant une section transversale circulaire.

7. Agencement de raccord (15) selon l'une quelconque des revendications 1 à 5, dans lequel chaque élément d'insertion respectif (16) a une section transversale semi-circulaire complémentaire à celle d'une section transversale semi-circulaire d'un canal respectif parmi deux canaux d'écoulement de fluide correspondants (6, 7) dudit tube d'étanchéité flexible multicanal (2).

8. Agencement de raccord (15) selon l'une quelconque des revendications 1 à 7, dans lequel lesdits passages de fluide (17) à travers chacun desdits éléments d'insertion respectifs (16) peuvent être raccordés de manière opérationnelle à un élément respectif desdits éléments de transport de fluide (22, 23) au niveau d'une première ouverture d'entrée/sortie (9a, 9b) au niveau d'une première extrémité (16a) de chacun desdits éléments d'insertion respectifs (16).

9. Agencement de raccord (15) selon l'une quelconque des revendications 1 à 8, dans lequel ladite structure de serrage a deux éléments de serrage (19).

10. Agencement de raccord (15) selon la revendication 9, dans lequel lesdits deux éléments de serrage (19) sont articulés ensemble sur un côté dudit passage traversant (19a), de telle sorte que ledit passage traversant (19a) desdits deux éléments de serrage (19) peut être fermé autour desdits éléments d'insertion (16) lorsqu'ils sont insérés dans lesdits canaux d'écoulement de fluide (6, 7) dudit tube d'étanchéité flexible multicanal (2).

11. Agencement de raccord (15) selon l'une quelconque des revendications 9 ou 10, dans lequel lesdits deux éléments de serrage (19) sont semi-cylindriques de telle sorte qu'une périphérie de deux de tels éléments de serrage semi-cylindriques (19) fermés autour desdits éléments d'insertion (16), lorsqu'ils sont insérés dans lesdits canaux d'écoulement de fluide (6, 7) dudit tube d'étanchéité flexible multicanal (2), forme une forme entièrement cylindrique.

12. Agencement de raccord (15) selon l'une quelconque des revendications 1 à 8, dans lequel ladite structure de serrage (18) a un élément de serrage (19) avec ledit passage traversant (19a) où la section transversale dudit passage traversant (19a) est effilée à partir d'une section transversale qui correspond à celle de ladite section transversale dudit tube d'étanchéité flexible multicanal (2) jusqu'à une section transversale qui est plus petite que celle de ladite section transversale dudit tube d'étanchéité flexible multicanal (2).

13. Agencement de raccord (15) selon l'une quelconque des revendications 1 à 12, dans lequel ledit tube d'étanchéité flexible (2) a une première extrémité (4) opposée à ladite seconde extrémité (5), ladite première extrémité (4) étant fermée.

14. Agencement de raccord (15') selon la revendication 1, dans lequel au moins l'un dudit élément d'insertion (16') a deux passages de fluide (17a, 17b) pour le raccordement à un tube d'étanchéité flexible (2'), ledit élément d'insertion (16') a une première extrémité et une seconde extrémité, et une seconde ouverture d'entrée/sortie au niveau de ladite seconde extrémité pour chacun desdits passages de fluide (17a, 17b), chacun desdits passages de fluide (17a, 17b) pouvant être raccordé fluidiquement à un canal d'écoulement de fluide respectif (6', 7') à l'intérieur dudit tube d'étanchéité flexible (2'), lesdits canaux d'écoulement de fluide (6', 7') étant séparés fluidiquement l'un de l'autre le long d'une majeure partie d'une extension longitudinale dudit tube d'étanchéité flexible (2'), lesdits canaux d'écoulement de fluide (6', 7') étant raccordés fluidiquement les uns aux autres plus près d'une première extrémité (4') dudit tube d'étanchéité flexible (2') que de ladite seconde extrémité (5') de celui-ci.

15. Procédé de raccordement, pour un échange de fluide avec des éléments de transport de fluide (22, 23), d'au moins deux canaux d'écoulement de fluide aux extrémités ouvertes (6, 7) au niveau d'une seconde extrémité d'un tube d'étanchéité flexible multicanal (2) adapté pour être installé dans et s'étendre le long d'un alésage au sol (3) dans un système (1) d'échange d'énergie avec ledit sol adjacent (3), comprenant les étapes suivantes :
a) l'insertion d'un élément d'insertion respectif (16) ayant une section transversale complémentaire à celle d'un dit canal d'écoulement de fluide (6, 7) et d'un passage de fluide (17) à travers celui-ci pouvant être raccordé de manière opérationnelle à un élément de transport de fluide respectif (22, 23) dans chacun desdits canaux d'écoulement de fluide à extrémités ouvertes (6, 7) ;
b) le serrage, sur ladite seconde extrémité (5) dudit tube d'étanchéité flexible multicanal (2), d'une structure de serrage ayant au moins un élément de serrage (19) doté d'un passage traversant (19a), lequel passage traversant (19a) a une section transversale qui correspond à ou est plus petite que celle de ladite section transversale dudit tube d'étanchéité flexible multicanal (2) ; et
c) le fait de forcer ensemble ledit passage traversant (19a) dudit au moins un élément de serrage (19) avec ledit passage traversant (19a) sur ladite seconde extrémité (5) dudit tube d'étanchéité flexible multicanal (2) avec un élément respectif desdits éléments d'insertion (16) inséré dans chacun desdits canaux d'écoulement de fluide aux extrémités ouvertes (6, 7) dudit tube d'étanchéité flexible multicanal (2) par un moyen de serrage (25) compris dans ladite structure de serrage, chaque élément d'insertion (16, 16') en outre ayant une première extrémité 16a et une seconde extrémité 16b et une extension le long de celles-ci, de telle sorte que chaque élément d'insertion (16, 16') et son passage traversant respectif (19a) fournissent entre eux et le long de ladite extension une longueur d'étanchéité pour l'agencement de raccord (15, 15').
